# EUROPEAN PATENT SPECIFICATION

(11) **EP 1 339 052 B1**
(45) Date of publication and mention of the grant of the patent: **26.11.2008**
(21) Application number: 03250527.3
(22) Date of filing: 29.01.2003
(51) Int. Cl.: G11B 7/09

(54) **Actuator, optical pickup employing the actuator, and optical recording and/or reproducing apparatus employing the pickup**
Aktuator, optisches Abtastgerät mit diesem Aktuator, und optisches Aufzeichnungs- und/oder Wiedergabegerät mit diesem Abtastgerät
Actionneur, tête optique comprenant cet actionneur, et appareil d'enregistrement et/ou de lecture optique comprenant cette tête optique

(30) Priority: 20.02.2002 KR 2002009097
(43) Date of publication of application: 27.08.2003
(73) Proprietor: SAMSUNG ELECTRONICS CO., LTD., Suwon-City, Kyungki-do (KR)
(72) Inventor: Kwon, Myung-sik, Paldal-gu, Suwon-si, Gyeonggi-do (KR); Pae, Jung-gug, Paldal-gu, Suwon-si, Gyeonggi-do (KR)
(74) Representative: Kohler, Janet Wendy

(56) References cited:
- EP-A- 1 152 404
- EP-A2- 1 128 364
- JP-A- 58 177 529
- US-A- 5 136 565
- US-B1- 6 285 517

## Description

The present invention relates to an actuator of an optical pickup used for recording information on and/or reproducing information from a disc, and more particularly, to an optical pickup actuator that compensates for deflection error caused by curvature of a disc, an optical pickup employing the optical pickup actuator, and an optical recording/reproducing apparatus employing the optical pickup.

In general, optical pickups are embedded in optical recording/reproducing apparatuses for recording information on and/or reproducing information from optical recording media such as discs. Optical pickups record and/or reproduce information by radiating a light beam 'onto a recording surface of a disc and receiving a light beam reflected back from the recording surface while moving in a radial direction of the disc.

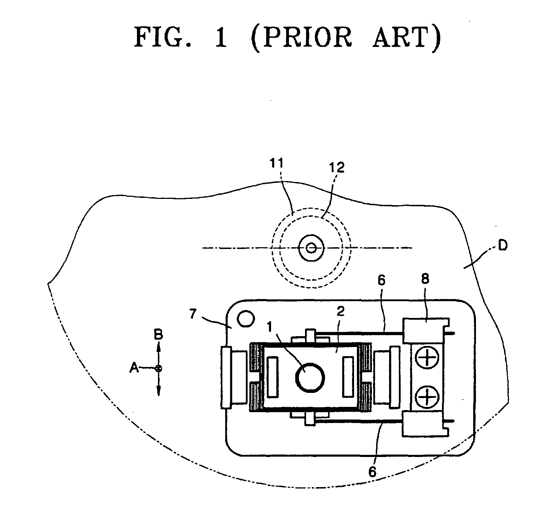

Figures 1 through 3 are views of an optical pickup actuator included in an optical pickup. The optical pickup actuator includes a base 7, a holder 8 fixed on the base 7, a bobbin 2 moveably supported by elastic supports 6 having one end fixed to the holder 8 and on which an objective lens 1 is mounted, a focusing coil 3 and tracking coils 4 mounted on the bobbin 2 so as to form paths through which current flows in order to drive the objective lens 1 in a focusing direction A and a tracking direction B, a magnet 10 which generates a magnetic field that interacts with current flowing through the focusing coil 3 and tracking coils 4 to produce an electromagnetic force used to drive the bobbin 2, and a yoke 9.

The optical pickup actuator having the above structure is opposite to a disc D, and moves in a radial direction of the disc D, recording information on and/or reproducing information from the disc D. Reference numerals 11 and 12 denote a turntable on which the disc D is seated, and a motor for turning the turntable, respectively.

In the above structure, if current is supplied to the focusing coil 3, the bobbin 2 is driven in the focusing direction A by an electromagnetic force generated by interaction of the current and the magnetic field by the magnet 10. In this case, a vertical focusing direction is determined according to the direction of the current supplied to the focusing coil 3. Thus, a focal distance between the recording surface of the disc D and the objective lens 1 can be controlled by adjusting the amount of current flowing through the focusing coil 3. In a similar way, the bobbin 2 can be driven appropriately in the tracking direction B by an electromagnetic force by controlling the amount of current flowing through the tracking coils 4, thereby enabling the objective lens 1 to accurately follow a desired track on the disc D.

Ideally, the recording surface of the disc D is formed to be level. However, in reality, the disc D is usually slightly curved upward or downward. This curvature of the disc D creates a kind of focusing error when the disc D is operated with the optical pickup actuator. In particular, when the disc D exhibiting curvature rotates on the turntable 11, the focal distance between the objective lens 1 of the optical pickup actuator and the disc D varies by an amount corresponding to the displacement of the disc surface from a flat plane due to its curvature. To compensate for this variation, the optical pickup actuator performs focus control.

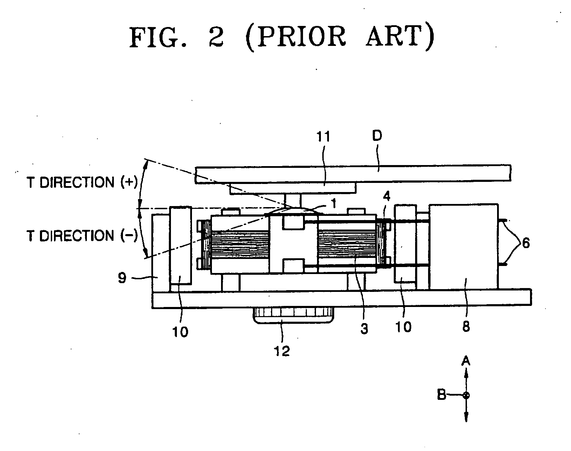

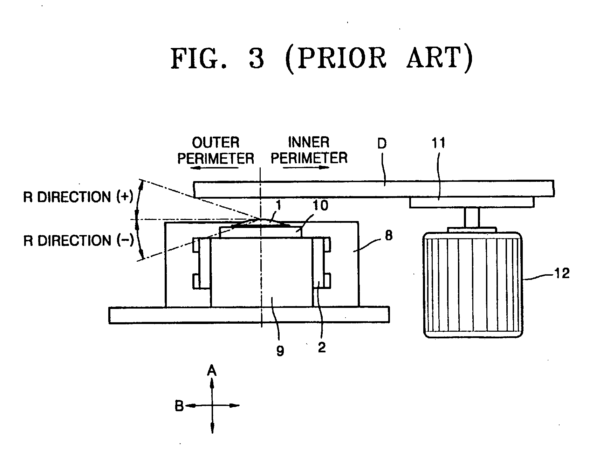

Meanwhile, since the bobbin 2 moves in an arc hanging on one end of the elastic supports 6, due to an error in a manufacturing process or a problem with the structure of the optical pickup actuator, the bobbin 2 does not accurately move in a vertical or horizontal direction during focusing and tracking operations. Instead, the bobbin 2 exhibits a rolling phenomenon in which the bobbin 2 tilts to one side or backward or forward. This rolling phenomenon includes tangential direction rolling in which the bobbin 2 tilts about an axis parallel to the radius vector of the disc D at the position of the bobbin 2, as shown in Figure 2, and radial direction rolling in which the bobbin 2 tilts about an axis parallel to the tangent of the disc D at the position of the bobbin 2, as shown in Figure 3. Here, tilting of the bobbin 2 toward the center of the disc D is referred to as (+) rolling, and tilting of the bobbin 2 toward the outer perimeter of the disk D is referred to as (-) rolling.

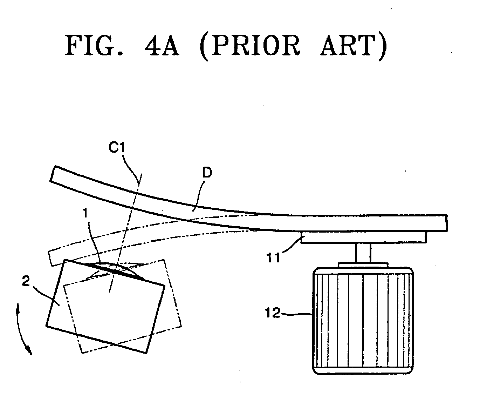

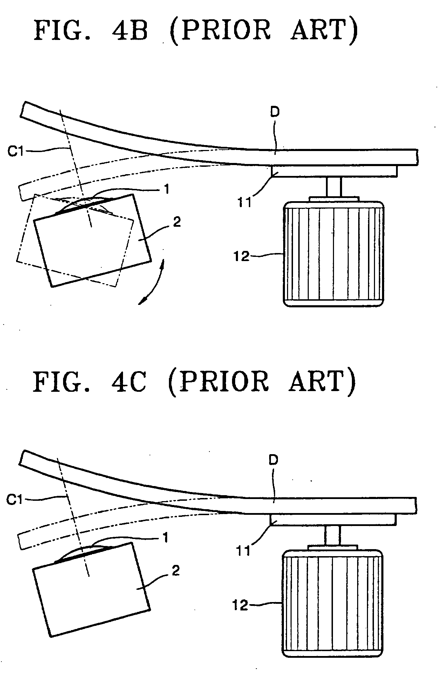

Furthermore, radial direction rolling includes the following three types. Figure 4A shows a first type of radial direction rolling herein referred to as type A radial rolling. Here, when the bobbin 2 moves upward, that is, when the objective lens 1 approaches the disc D, the type A radial rolling is said to be in a (+) direction, and, conversely, when the bobbin 2 moves downward, the type A radial rolling is said to be in a (-) direction. Figure 4B shows a second type of radial direction rolling herein referred to as type B radial rolling. Here, when the bobbin 2 approaches the disc D, the type B radial rolling is said to be in the (-) direction, and when the bobbin 2 moves downward, the type B radial rolling is said to be in the (+) direction. Figure 4C shows a third type of radial direction rolling herein referred to as type C radial rolling. Here, the rolling direction does not depend on whether the objective lens 1 ascends or descends. That is, whether the objective lens 1 approaches the disc D or is spaced apart from the disc D by a predetermined gap, rolling is in one of (+) and (-) directions.

After performing a focusing operation to adjust the orientation of the objective lens 1 for the disc D exhibiting curvature, if the optical axis C1 of the objective lens 1 is not perpendicular to the recording surface of the disc, this is known as deflection error. Here, when performing the focusing operation, type A radial rolling causes an optical axis C1 of the objective lens 1 to be almost perpendicular to the recording surface of the disc D. Thus, type A radial rolling is effective in offsetting defection error. On the contrary, type B radial rolling causes the optical axis C1 of the objective lens 1 and the recording surface of the disc D to move even further from a perpendicular arrangement, thereby increasing the deflection error. Meanwhile, type C radial rolling is effective only in one case in which the objective lens 1 moves upward or downward but is not effective in the other case.

Considering the three types of radial rolling, in order to properly adjust the orientation of the objective lens 1 with respect to a disc exhibiting curvature, type A is the most desirable, and type C is not desirable but available. However, type B has a harmful effect on recording/reproducing performance, and thus it is desirable not to use type B. However, in conventional optical pickup actuators, the three types of radial rolling appear with almost equal frequencies due to various factors related to assembly tolerance in assembly of the actuators. In order to solve this problem, in the prior art, without any special measures, when new optical pickup actuators are manufactured, those exhibiting type B radial rolling are treated as defective, and only those having types A and C are used. However, treating newly manufactured optical pickup actuators exhibiting type B radial rolling as defective results in low production efficiency and high production overhead.

Accordingly, an optical pickup actuator which consistently exhibits A type radial rolling is required.

EP-A-1152404 discloses an optical pick up device for use with an optical disk apparatus for recording and/reproducing an optical disk. The actuator is provided with four spring wires which support a lens holder. The spring wires of the inner peripheral side have spring constants larger than the spring wires of the outer peripheral side such that the holder is not moved linearly and is included when it reaches a constant height. This document provides basis for the pre-characterising portion of the independent claims appended hereto.

An aim of the present invention is to provide an optical pickup actuator which ideally can control rolling in a radial direction so as to compensate for curvature of a disc during a focusing operation, an optical pickup employing the optical pickup actuator, and an optical recording/reproducing apparatus employing the optical pickup.

According to the present invention there is provided an apparatus and method as set forth in the appended claims. Preferred features of the invention will be apparent from the dependent claims, and the description which follows.

In one aspect of the present invention there is provided an optical pickup actuator adapted for use with a disc comprising: a base having a holder; a bobbin mounting an objective lens; a plurality of elastic supports having one end coupled to the holder and the other end coupled to the bobbin such that the bobbin is movably supported; and a magnetic driving portion which drives the bobbin in a focusing direction or tracking direction, wherein the plurality of elastic supports comprises inner elastic supports that are positioned on a side of the optical pickup actuator closest to the center of the disc when in use with the disc and outer elastic supports that are positioned on the opposite side of the optical pickup actuator closest to the outer perimeter of the disc when in use with the disc, and the inner elastic supports and outer elastic supports have different levels of stiffness; characterised in that: the outer elastic supports are longer than the inner elastic supports.

The outer elastic supports are longer than the inner elastic supports.

The difference in length between the outer elastic supports and the inner elastic supports is greater than 0 and less than 3 mm.

For a better understanding of the invention, and to show how embodiments of the same may be carried into effect, reference will now be made, by way of example, to the accompanying diagrammatic drawings in which:
Figure 1 is a plan view of a conventional optical pickup actuator;
Figure 2 is a front view of the optical pickup actuator shown in Figure 1;
Figure 3 is a cross-sectional view of the optical pickup actuator shown in Figure 1;
Figures 4A through 4C illustrate the effects of radial rolling during a focusing operation;
Figure 5 illustrates a preferred embodiment of an optical pickup actuator according to the present invention;
Figure 6 is a plan view of the optical pickup actuator shown in Figure 5;
Figures 7A through 7C illustrate working effects of a preferred embodiment of the optical pickup actuator according to the present invention; and
Figure 8 schematically illustrates a preferred embodiment of an optical recording/reproducing apparatus having an optical pickup employing the optical pickup actuator according to the present invention.

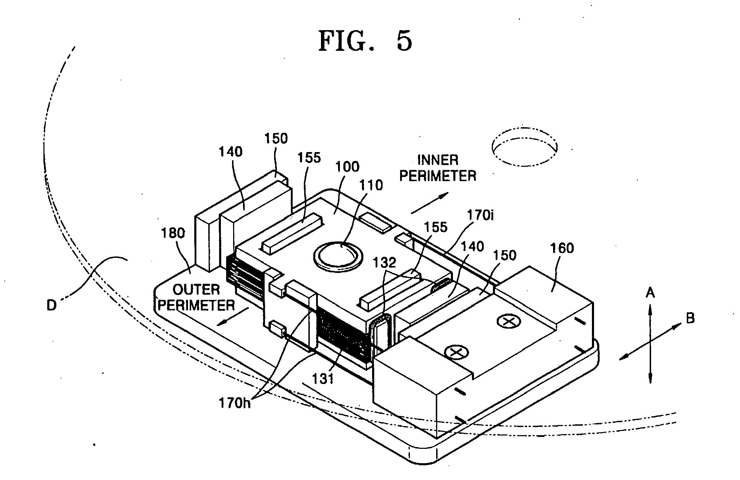

Referring to Figure 5, an optical pickup actuator according to a preferred embodiment of the present invention includes a base 180, a holder 160 positioned at one side of the base 180, a bobbin 100 on which an objective lens 110 is mounted, a plurality of elastic supports 170i and 170h connecting the bobbin 100 to the holder 160, and a magnetic driving portion which drives the bobbin 100 in a focusing direction A and a tracking direction B.

The magnetic driving portion includes magnets 140 that are positioned opposite to each other with the bobbin 100 placed between them, an external yoke 150 which is installed on the base 180 and fixes the magnets 140 in place, an internal yoke 155 which is installed on the base 180 between and opposite to the magnets 140 and guides the bobbin 100, a focusing coil 131 wound around the outside of the bobbin 100, and tracking coils 132 wound at sidewalls of the bobbin 100 opposite to the magnets 140.

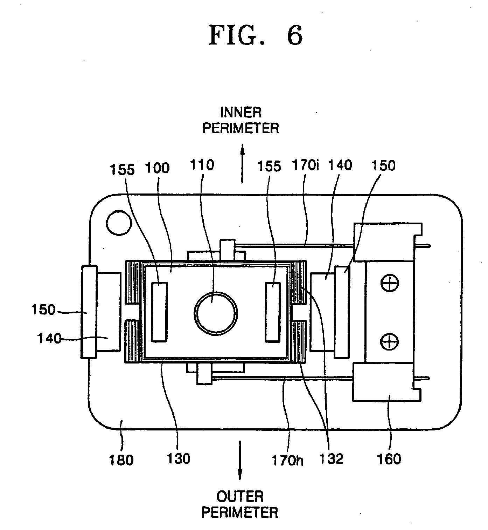

The bobbin 100 is supported by the plurality of elastic supports 170i and 170h connected to the holder 160 such that the bobbin 100 can elastically move. The elastic supports 170i are positioned at a side of the optical pickup actuator closest to the center of a disc D and are hereinafter referred to as inner elastic supports 170i. Meanwhile, the elastic supports 170h are positioned at a side of the optical pickup actuator furthest from the center of the disc D and are hereinafter referred to as outer elastic supports 170h. Here, the stiffness of the inner elastic supports 170i is different from the stiffness of the outer elastic supports 170h. This difference in stiffness may be achieved, for example, by making at least one of the thickness, length, and material of the elastic supports different between the inner and outer elastic supports 170i and 170h. As shown in Figure 6, which is a plan view of the optical pickup actuator shown in Figure 5, it is preferable that the length of the inner elastic supports 170i is different from that of the outer elastic supports 170h. In particular, it is preferable that the outer elastic supports 170h are longer than the inner elastic supports 170i. Furthermore, it is preferable that the difference in length between the inner and outer elastic supports 170i and 170h is greater than 0 and less than 3 mm. These limits were found to be optimal for compensating for curvature of discs. If the difference in length between the inner and outer elastic supports 170i and 170h is too large, over compensation for deflection error may occur.

The operation of the optical pickup actuator having the above structure will now be described. If current is applied to the focusing coil 131 or the tracking coils 132, the bobbin 100 is driven in a focusing direction A or a tracking direction B by electromagnetic force generated by interaction of the current with the magnetic field of the magnets 140. Here, when the bobbin 100 is driven in the focusing direction A, the vertical movement direction of the bobbin 100 is determined by the direction of current applied to the focusing coil 131. Likewise, when the bobbin 100 is driven in the tracking direction B the horizontal movement direction of the bobbin 100 is determined by the direction of current applied to the tracking coils 132. Here, the internal yoke 155 serves to guide the bobbin 100 during a focusing or tracking operation and simultaneously forms a magnetic path together with the external yoke 150. In this way, the focusing and tracking operations enable the bobbin 100 to be oriented such that a beam passing through the objective lens 110 is properly focused on the disc D, thereby enabling information to be recorded on and/or read from the disc D.

As described above, the bobbin 100 is movably supported by the elastic supports 170i and 170h, thereby enabling rolling of the bobbin 100 to be achieved during a focusing or tracking operation. Since the length of the outer elastic supports 170h is greater than that of the inner elastic supports 170i, the stiffness of the outer elastic supports 170h is less than that of the inner elastic supports 170i. Accordingly, the outer side of the optical pickup actuator is deflected more than the inner side during a focusing or tracking operation. That is, the displacement of the side of the bobbin 100 closer to the outer perimeter of the disc D is larger than the displacement of the side of the bobbin closer to the center of the disc D. Accordingly, deflection error of the disc D, in which the displacement of the surface of the disc D with respect to a flat plane increases as distance from the center of the disc D increases, is compensated for by the larger deflection of the outer side of the optical pickup actuator.

In the present embodiment, the stiffness of the inner and outer elastic supports 170i and 170h is made different by making the lengths of the inner and outer elastic supports 170i and 170h different. However, alternative embodiments may be realized by making at least one of thickness, length, and material different between the inner and outer elastic supports 170i and 170h.

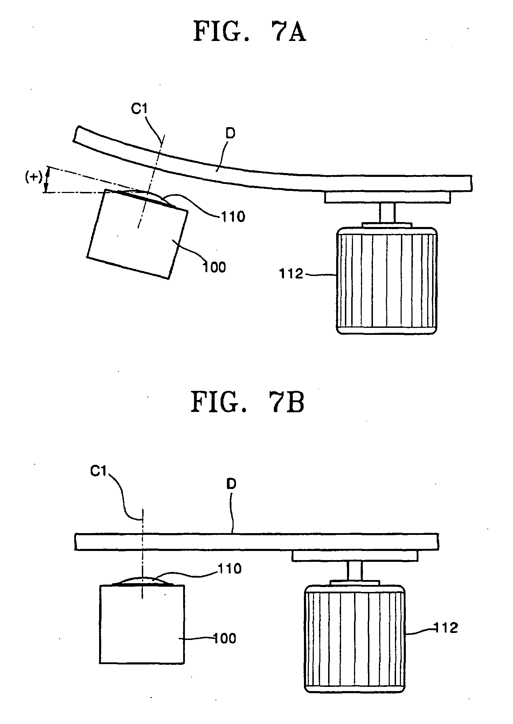

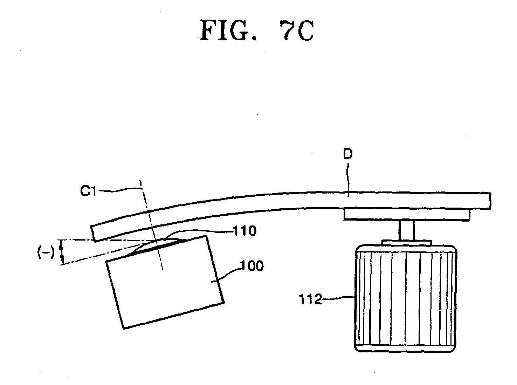

Referring to Figure 7A, when the disc D curves upward toward its outer perimeter, (+) direction rolling is achieved while the bobbin 100 moves upward, thereby accurately focusing a light beam passing through the objective lens 110 onto the surface of the disc D. Here, reference numeral 112 denotes a motor for rotating the disc D. Also, as shown in Figure 7B, when the disc D is perfectly flat, the bobbin 100 faces upward and a light beam is accurately focused. Moreover, as shown in Figure 7C, when the disc D curves downward toward its outer perimeter, (-) direction rolling is achieved while the bobbin 100 moves downward, such that the disc surface is perpendicular to the optical axis of the objective lens 110, and thus light passing through the objective lens 110 is accurately focused on the disc surface.

In this manner, the optical pickup actuator according to the present invention offsets deflection error resulting from curvature of the disc D during a focusing operation, thereby achieving proper perpendicular orientation of the optical axis of the objective lens 110 with respect to the surface of the disc D. Consequently, an optical pickup having the optical pickup actuator according to the present invention can compensate for curvature in the disc D such that light passing through the objective lens 110 is accurately focused on the disc D.

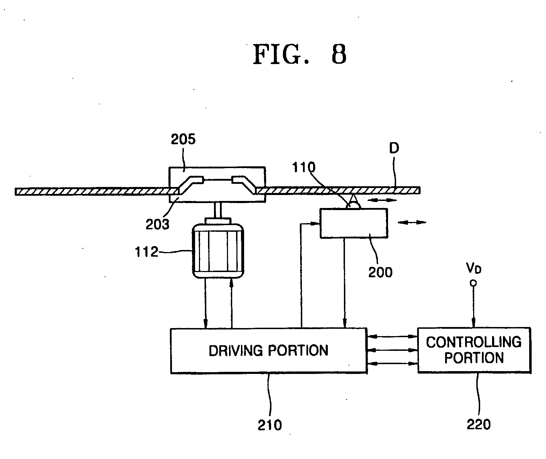

Referring to Figure 8, an optical recording/reproducing apparatus employing an optical pickup actuated by the optical pickup actuator according to the present invention includes a spindle motor 112 which rotates a disc D, an optical pickup 200 which is installed in the radial direction of the disc D and records information on and/or reproduces information from the disc D, a driving portion 210 which drives the spindle motor 112 and the optical pickup 200, and a controlling portion 220 which controls focusing and tracking servos of the optical pickup 200. The optical pickup 200 includes an optical system having an objective lens 110, and an actuator which drives the objective lens 110 in focusing and tracking directions. Here, reference numerals 203 and 205 denote a turntable on which the disc D is mounted, and a clamp for chucking the disc D, respectively.

Light reflected from the disc D is detected by the optical pickup 200, photoelectrically converted into an electrical signal, and the electrical signal is input into the controlling portion 220 through the driving portion 210. The driving portion 210 controls rotation speed of the spindle motor 112, amplifies an input signal and drives the optical pickup 200. The controlling portion 220 transmits commands for a focusing servo and a tracking servo that are controlled based on a signal input from the driving portion 210 to the driving portion 210 so as to perform focusing and tracking operations of the optical pickup 200.

As shown in Figures 5 and 6, in the optical pickup actuator, the holder 160 is positioned at one side of the base 180, and the plurality of elastic supports 170i and 170h are connect the bobbin 100 on which the objective lens 110 is mounted to the holder 160, and thus the bobbin 100 is movably supported by the inner and outer elastic supports 170i and 170h. Here, the stiffness of the inner elastic supports 170i is different from that of the outer elastic supports 170h. This difference in stiffness of the elastic supports can be achieved by making at least one of thickness, length, and material different between the inner and outer elastic supports 170i and 170h. For example, the length of the outer elastic supports 170h may be different from that of the inner elastic supports 170i. In particular, it is preferable that the length of the outer elastic supports 170h is greater than the length of the inner elastic supports 170i. Furthermore, it is preferable that the difference in lengths between the inner elastic supports 170i and the outer elastic supports 170h is greater than 0 and less than 3 mm.

The optical pickup actuator further includes the magnetic driving portion which drives the bobbin 100 in the focusing direction A and tracking direction B. The magnetic driving portion is described in detail above.

As described above, the optical pickup actuator, the optical pickup employing the optical pickup actuator, and the optical recording/reproducing apparatus employing the optical pickup, produce rolling in a desired direction during an operation of focusing the bobbin, owing to the elastic supports on the outer side of the optical pickup actuator being stiffer than the elastic supports on the inner side of the optical pickup actuator, thereby compensating for curvature of a disc. Among optical pickup actuators according to the present invention, none exhibit type B radial rolling, more than 90% exhibit type A radial rolling, and the remainder exhibit type C radial rolling. Accordingly, recording and reproduction performance with discs exhibiting curvature is improved, and, in fact, the overall performance of an optical recording/reproducing apparatus is improved. In addition, rolling defects occurring in the manufacture of conventional optical pickup actuators, and jitter occurring when using a conventional optical pickup with a curved disc, are reduced according to the present invention. Therefore, production efficiency is improved and manufacturing overhead is reduced.

Although a few preferred embodiments have been shown and described, it will be appreciated by those skilled in the art that various changes and modifications might be made without departing from the scope of the invention, as defined in the appended claims.

## Claims

1. An optical recording/reproducing apparatus comprising a spindle motor which rotates a disc, an optical pickup which is movably installed in the radial direction of the disc by a pickup actuator, a driving portion (140,150) which drives the spindle motor and the optical pickup, and a controlling portion which controls focusing and tracking servos of the optical pickup, wherein the optical pickup actuator comprises:
a base (180) having a holder (160);
a bobbin (100) mounting an objective lens;
a plurality of elastic supports (170i,170h) having one end coupled to the holder and the other end coupled to the bobbin such that the bobbin is movably supported, the plurality of elastic supports (170i,170h) including inner elastic supports (170i) that are positioned on a side of the optical pickup actuator closest to the rotation axis of the spindle motor and outer elastic supports (170h) that are positioned on the opposite side of the optical pickup actuator furthest from the rotation axis of the spindle motor, the inner elastic supports (170i) and outer elastic supports (170h) having different levels of stiffness; and
a magnetic driving portion (140,150) which drives the bobbin in a focusing direction and a tracking direction;
**characterised in that:**
the outer elastic supports (170h) are longer than the inner elastic supports (170i).

2. The optical recording/reproducing apparatus of claim 1, wherein the outer elastic supports (170h) are less stiff than the inner elastic supports (170i).

3. The optical recording/reproducing apparatus of claim 1 or 2, wherein the difference in stiffness between the inner and outer elastic supports (170h) is caused by a difference in at least one of thickness, length, and material between the inner and outer elastic supports (170h).

4. The optical recording/reproducing apparatus of any of claims 1 to 3, wherein the difference in length between the outer elastic supports (170h) and the inner elastic supports (170i) is greater than 0 and less than 3 mm.

5. The optical recording/reproducing apparatus of any of claims 1 through 4, wherein the magnetic driving portion (140,150) comprises:
magnets (140) positioned opposite to each other at both sides of the bobbin;
an external yoke (150) which is installed at the base and fixes the magnets (140) in position;
an internal yoke (155) which is installed at the base between and opposite to the magnets (140) and guides movement of the bobbin;
a focusing coils (132) wound around the outside of the bobbin; and
tracking coils (132) wound at sidewalls of the bobbin opposite to the magnets (140).

6. An optical recording/reproducing apparatus according to any preceding claim, wherein the optical pickup includes an optical system having an objective lens and the optical pickup actuator, said controlling portion controlling said focusing and tracking servos of the objective lens and recording information on and/or reproducing information from the disc.

## Patentansprüche

1. Optisches Aufzeichnungs-/Wiedergabegerät mit einem Spindelmotor, der einen Datenträger dreht, einem optischen Abtastgerät, das so montiert ist, dass es von einem Abtastgerätaktuator in der radialen Richtung des Datenträgers bewegt werden kann, einem Antriebsteil (140, 150), das den Spindelmotor und das optische Abtastgerät antreibt, und einem Steuerungsteil, das den Fokussierungs- und Spurführungsservo des optischen Abtastgeräts steuert, wobei der Aktuator des optischen Abtastgeräts Folgendes umfasst:
eine Grundfläche (180) mit einer Halterung (160);
eine Bobine (100), die eine Objektivlinse trägt;
mehrere elastische Stützen (170i, 170h), deren eines Ende mit der Halterung und deren anderes Ende mit der Bobine so verbunden ist, dass die Bobine beweglich gestützt ist, wobei die mehreren elastischen Stützen (170i, 170h) elastische Innenstützen (170i), die auf einer der Drehachse des Spindelmotors am nächsten gelegenen Seite des Aktuators für das optische Abtastgerät positioniert sind, und elastische Außenstützen (170h) umfassen, die auf der gegenüberliegenden Seite des Aktuators für das optische Abtastgerät von der Drehachse des Spindelmotors am weitesten weg positioniert sind, wobei die elastischen Innenstützen (170i) und die elastischen Außenstützen (170h) unterschiedliche Steifheitsgrade haben; und
ein magnetisches Antriebsteil (140, 150), das die Bobine in eine Fokussierungsrichtung und eine Spurführungsrichtung antreibt;
**dadurch gekennzeichnet, dass**
die elastischen Außenstützen (170h) länger als die elastischen Innenstützen (170i) sind.

2. Optisches Aufzeichnungs-/Wiedergabegerät nach Anspruch 1, wobei die elastischen Außenstützen (170h) weniger steif als die elastischen Innenstützen (170i) sind.

3. Optisches Aufzeichnungs-/Wiedergabegerät nach Anspruch 1 oder 2, wobei die Steifedifferenz zwischen den elastischen Innen- und Außenstützen (170h) durch eine Differenz hinsichtlich Dicke, Länge und/oder Material zwischen den elastischen Innen- und Außenstützen (170h) herbeigeführt wird.

4. Optisches Aufzeichnungs-/Wiedergabegerät nach einem der Ansprüche 1 bis 3, wobei die Längendifferenz zwischen den elastischen Außenstützen (170h) und den elastischen Innenstützen (170i) größer als 0 und weniger als 3 mm ist.

5. Optisches Aufzeichnungs-/Wiedergabegerät nach einem der Ansprüche 1 bis 4, wobei das magnetische Antriebsteil (140, 150) Folgendes umfasst:
Magneten (140), die sich an beiden Seiten der Bobine gegenüberliegen;
ein Außenjoch (150), das an der Grundfläche montiert ist und die Magneten (140) festlegt;
ein Innenjoch (155), das an der Grundfläche zwischen den Magneten (140) und ihnen gegenüberliegend montiert ist und die Bewegung der Bobine führt;
eine Fokussierungsspule (132), die um die Außenseite der Bobine gewickelt ist; und
Spurführungsspulen (132), die an Seitenwänden der Bobine gegenüber der Magneten (140) gewickelt sind.

6. Optisches Aufzeichnungs-/Wiedergabegerät nach einem der vorhergehenden Ansprüche, wobei das optische Abtastgerät ein optisches System mit einer Objektivlinse und den Aktuator für das optische Abtastgerät umfasst, wobei das Steuerungsteil den Fokussierungs- und Spurführungsservo der Objektivlinse steuert und Informationen auf den Datenträger aufzeichnet oder davon wiedergibt.

## Revendications

1. Appareil d'enregistrement/reproduction optique comprenant un moteur d'axe d'entraînement qui fait tourner un disque, un dispositif optique de lecture qui est installé de façon mobile dans le sens radial du disque par un actionneur de dispositif de lecture, une partie d'entraînement commande (140, 150) qui entraîne le moteur d'axe d'entraînement et le dispositif optique de lecture, et une partie de commande qui commande les servos de focalisation et d'alignement du dispositif optique de lecture, dans lequel l'actionneur de dispositif optique de lecture comprend :
une base (180) ayant un support (160) ;
une bobine (100) sur laquelle est montée une lentille d'objectif ;
une pluralité de supports élastiques (170i, 170h) ayant une extrémité couplée au support et l'autre extrémité couplée à la bobine de telle sorte que la bobine soit supportée de façon mobile, la pluralité de supports élastiques (170i, 170h) comportant des supports élastiques internes (170i) qui sont positionnés sur un côté de l'actionneur du dispositif optique de lecture le plus près de l'axe de rotation du moteur d'axe d'entraînement et des supports élastiques externes (170h) qui sont positionnés sur le côté opposé de l'actionneur du dispositif optique de lecture le plus loin de l'axe de rotation du moteur d'axe d'entraînement, les supports élastiques internes (170i) et les supports élastiques externes (170h) ayant des niveaux différents de rigidité ; et
une partie d'entraînement magnétique (140, 150) qui entraîne la bobine dans un sens de focalisation et un sens d'alignement ;
**caractérisé en ce que :**
les supports élastiques externes (170h) sont plus longs que les supports élastiques internes (170i).

2. Appareil d'enregistrement/reproduction optique selon la revendication 1, dans lequel les supports élastiques externes (170h) sont moins rigides que les supports élastiques internes (170i).

3. Appareil d'enregistrement/reproduction optique selon la revendication 1 ou 2, dans lequel la différence de rigidité entre les supports élastiques internes et externes (170h) est causée par une différence d'au moins l'une d'une épaisseur, longueur et matière entre les supports élastiques internes et externes (170h).

4. Appareil d'enregistrement/reproduction optique selon l'une quelconque des revendications 1 à 3, dans lequel la différence de longueur entre les supports élastiques externes (170h) et les supports élastiques internes (170i) est supérieure à 0 et inférieure à 3 mm.

5. Appareil d'enregistrement/reproduction optique selon l'une quelconque des revendications 1 à 4, dans lequel la partie d'entraînement magnétique (140, 150) comprend :
des aimants (140) positionnés en vis à vis des deux côtés de la bobine ;
un collier externe (150) qui est installé à la base et fixe les aimants (140) en place ;
un collier interne (155) qui est installé à la base entre les aimants (140) et opposé à ceux-ci et qui guide le mouvement de la bobine ;
des bobines de focalisation (132) enroulées autour de l'extérieur de la bobine ; et
des bobines d'alignement (132) enroulées au niveau de parois latérales de la bobine en face des aimants (140).

6. Appareil d'enregistrement/reproduction optique selon l'une quelconque des revendications précédentes, dans lequel le dispositif optique de lecture comporte un système optique ayant une lentille d'objectif et l'actionneur de dispositif optique de lecture, ladite partie de commande commandant lesdits servos de focalisation et d'alignement de la lentille d'objectif et enregistrant des informations sur le disque et/ou reproduisant des informations du disque.
